# FASCICULE DE BREVET EUROPEEN

(11) **EP 3 467 605 B1**
(45) Date de publication et mention de la délivrance du brevet: **02.08.2023**
(21) Numéro de dépôt: 18196946.0
(22) Date de dépôt: 26.09.2018
(51) Int. Cl.: G05B 23/02, G05D 23/19, G05B 19/042

(54) **PROCÉDÉ DE SURVEILLANCE D'UN SYSTÈME DE RÉGULATION DE LA TEMPÉRATURE ASSOCIÉ À UNE ARMOIRE ÉLECTRIQUE**
ÜBERWACHUNGSVERFAHREN EINES SYSTEMS ZUR TEMPERATURREGULIERUNG, DAS ZU EINEM SCHALTSCHRANK GEHÖRT
METHOD FOR MONITORING A TEMPERATURE CONTROL SYSTEM ASSOCIATED WITH AN ELECTRICAL CABINET

(30) Priorité: 05.10.2017 FR 1759345
(43) Date de publication de la demande: 10.04.2019
(73) Titulaire: Schneider Electric Industries SAS, 92500 Rueil-Malmaison (FR)
(72) Inventeur: LOPEZ, Josep, 38050 Grenoble Cedex 09 (FR); PERRIN, Alain, 38050 Grenoble Cedex 09 (FR)
(74) Mandataire: Lavoix

(56) Documents cités:
- EP-A2- 1 594 023
- WO-A1-2015/170022
- FR-A1- 2 836 760
- FR-B1- 2 836 760

## Description

La présente invention se rapporte à un procédé de surveillance d'un système de régulation de température d'une armoire électrique.

L'invention se rapporte également à un système de surveillance configuré pour mettre en oeuvre ce procédé de commande.

### Etat de la technique

Une armoire électrique est destinée à renfermer des appareils électriques divers. Certains de ces appareils électriques peuvent chauffer et il est souvent nécessaire de prévoir un système de refroidissement associé à l'armoire électrique pour refroidir et réguler la température à l'intérieur de l'armoire électrique. Par ailleurs, il peut également s'avérer nécessaire de réchauffer l'intérieur de l'armoire à l'aide d'un système de chauffage.

Au cours du temps, l'architecture de régulation de température d'une armoire électrique peut évoluer, avec l'ajout ou le retrait de certains composants pour adapter son dimensionnement aux contraintes de régulation de température imposées par les appareils présents dans l'armoire électrique. Il est donc nécessaire de toujours proposer des services adaptés à l'architecture qui est en place sur l'armoire, afin de pouvoir communiquer des informations pertinentes à l'utilisateur.

FR2836760A1 décrit un système de surveillance et de commande d'une armoire de distribution électrique pour surveiller et/ou commander et/ou régler des fonctions spécifiques à l'armoire. Ce système de surveillance comprend un dispositif de commande et plusieurs capteurs et/ou actionneurs différents, couplables ou couplés au dispositif de commande par l'intermédiaire d'un dispositif de connexion de capteurs comportant au moins un point de connexion de capteur. Ce dispositif de connexion de capteurs inclut un dispositif de reconnaissance pour distinguer les différents capteurs et/ou actionneurs, lesquels peuvent être connectés d'une manière identique, quelconque et interchangeable au(x) point(s) de connexion.

Aujourd'hui, il n'existe cependant pas de solutions de surveillance qui permettent de déterminer l'architecture du système de refroidissement et/ou de chauffage, de détecter les changements possibles dans cette architecture et de déterminer des services qui sont toujours adaptés à l'architecture du système de régulation de la température en cours de fonctionnement.

Le but de l'invention est donc de proposer un procédé de surveillance permettant de remplir ces objectifs.

### Exposé de l'invention

Ce but est atteint par un procédé de surveillance tel que défini à la revendication 1.

Des particularités de ce procédé sont spécifiées aux revendications 2 à 4.

L'invention concerne également un système de surveillance tel que défini à la revendication 5.

Des particularités de ce système de surveillance sont spécifiées aux revendications 6 à 8.

### Brève description des figures

D'autres caractéristiques et avantages vont apparaître dans la description détaillée qui suit faite en regard des dessins annexés dans lesquels :
- La figure 1 représente une armoire électrique à laquelle est associé le système de surveillance de l'invention ;
- La figure 2 représente l'algorithme d'identification exécuté par le système de surveillance pour identifier le système de régulation de la température associé à l'armoire électrique ;

### Description détaillée d'au moins un mode de réalisation

De manière connue, une armoire électrique 1 est destinée à loger des appareils électriques 2. Pour agir sur la température à l'intérieur de l'armoire électrique, un système de chauffage et/ou de refroidissement est employé, désigné ci-après système 3 de régulation de la température. Par système 3 de régulation de température, on entend ci-après une solution qui permet de maintenir la température à l'intérieur de l'armoire électrique dans une plage de température déterminée souhaitée et acceptable, ne risquant pas d'entraîner une détérioration des appareils 2 présents dans l'armoire.

Le système 3 de régulation de la température présente en règle générale une ou plusieurs des architectures suivantes :
- Système d'aération naturelle ;
- Brassage sans grille ;
- Système de ventilation à l'aide d'un ou plusieurs ventilateurs et grille ;
- Système de chauffage doté d'une ou plusieurs résistances chauffantes, ventilé ou non ;
- Système de refroidissement doté d'un climatiseur ;
- Système de refroidissement doté d'un échangeur air/air ;
- Système de refroidissement doté d'un échangeur thermique air/eau ;

Le système 3 de régulation de la température comporte en général une unité de commande 30 pouvant se baser sur un ou plusieurs des paramètres suivants pour fonctionner :
- Etat du thermostat - Déclenchement ou non déclenchement ;
- Température interne à l'armoire ;
- Etat thermostat - Déclenchement mode haute température ;
- Etat du contact de la porte de l'armoire électrique ;
- Temps ;
- Etat de la serrure électronique de la porte de l'armoire ;
- Niveau d'encrassement du filtre ;
- Température de surface ;
- Niveau de vibration ;
- Nombre de tours par minute du ventilateur (RPM) ;
- Température au niveau de la grille d'entrée d'air ;
- Température au niveau de la grille de sortie d'air ;
- Température de la résistance de chauffage ;
- Température du condenseur ;
- Température de l'évaporateur ;
- Température du compresseur ;
- Température externe, à l'extérieur de l'armoire électrique ;
- Température de l'eau utilisée dans l'échangeur air/eau ;
- Pression de l'air dans l'armoire électrique ;
- Degré d'hygrométrie à l'intérieur de l'armoire électrique ;
- Courant électrique consommé par le système de ventilation ;
- Courant électrique consommé par le système de chauffage ;
- Courant électrique consommé par le système de refroidissement ;

Pour obtenir chacun de ces paramètres, le système 3 de régulation de la température comporte une ou plusieurs des entités 31 de mesure et/ou de détection suivantes :
- Un capteur de détection de l'état du thermostat - En déclenchement ou en non déclenchement ;
- Capteur de mesure de la température interne de l'armoire ;
- Un capteur de détection de l'état du thermostat dans son mode haute température ;
- Un capteur de détection de l'état de la porte de l'armoire électrique, ouverte ou fermée ;
- Une horloge pour indiquer le temps ;
- Un capteur de détection de l'état de la serrure électronique de la porte de l'armoire ;
- Un capteur du niveau d'encrassement du filtre ;
- Un capteur de mesure de la température de surface ;
- Un capteur de mesure du niveau de vibration ;
- Un capteur de comptage du nombre de tours par minute de chaque ventilateur (RPM) ;
- Un capteur de mesure de la température au niveau de la grille d'entrée d'air ;
- Un capteur de mesure de la température au niveau de la grille de sortie d'air ;
- Un capteur de mesure de la température de la résistance de chauffage ;
- Un capteur de mesure de la température du condenseur ;
- Un capteur de mesure de la température de l'évaporateur ;
- Un capteur de mesure de la température du compresseur ;
- Un pressostat pour mesurer la pression dans l'armoire électrique ;
- Un capteur de mesure de la température externe, à l'extérieur de l'armoire électrique ;
- Un capteur de mesure de la température de l'eau utilisée dans l'échangeur air/eau ;
- Un capteur de mesure du degré d'hygrométrie à l'intérieur de l'armoire électrique ;
- Un capteur de mesure du courant électrique consommé par le système de ventilation ;
- Un capteur de mesure du courant électrique consommé par le système de chauffage ;
- Un capteur de mesure du courant électrique consommé par le système de refroidissement ;

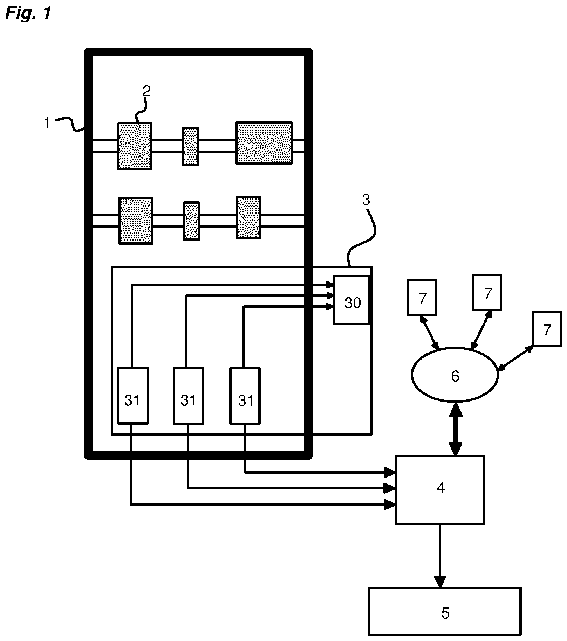

Sur la figure 1, les entités 31 de détection et/ou de mesure sont représentées de manière simplifiée mais il faut comprendre qu'elles sont positionnées de manière adaptée pour remplir leur fonction et fournir les données appropriées.

Bien entendu, les entités 31 de mesure et/ou de détection (capteur ou autres) citées ci-dessus ne sont pas forcément toutes associées en même temps à l'armoire électrique 1. Le système 3 de régulation de la température peut comporter une ou plusieurs de ces entités 31.

Chacune des entités 31 est destinée à être connectée sur une entrée de l'unité de commande 30 du système. En fonction des données mesurées ou fournies par chacune des entités 31 connectés, l'unité de commande applique un contrôle adapté.

Le système de surveillance 4 de l'invention est destiné à se connecter aux différentes entités du système 3 de régulation de la température, à identifier quel est le système de régulation qui est implanté et à activer un ou plusieurs services adaptés au système 3 de régulation de la température qui a été identifié.

Ce système de surveillance 4 pourra être implémenté directement dans l'unité de commande 30 du système 3 de régulation de la température, être intégré dans un boîtier de surveillance adapté (comme sur la figure 1). Dans ce dernier cas, il devra être raccordé par des liaisons filaires ou sans fils aux entités 31 de mesure et/ou de détection du système 3 de régulation de la température afin de les identifier et de collecter leurs données.

Par ailleurs, le système de surveillance 4 peut être connecté à tout serveur 6 externe lui permettant de télécharger des données ou d'envoyer des données vers l'extérieur. Il s'agira par exemple de connecter le système de surveillance 4 à une architecture en nuage ("cloud") incluant un ou plusieurs serveurs 6 pour rendre disponible toute donnée de surveillance à des utilisateurs via des terminaux 7 connectés audit serveur 6. Un ou plusieurs réseaux de communication connus permettent d'établir les liaisons entre le système de surveillance et le serveur 6 et entre le serveur 6 et les terminaux 7. Les communications pourront être bidirectionnels, c'est-à-dire qu'à partir d'un terminal 7, un utilisateur pourra agir sur le système de surveillance pour par exemple régler des paramètres ou activer/désactiver des services. Il pourra également recevoir directement toute alerte sur son terminal 7.

En variante, le système de surveillance 4 peut être implanté directement dans ladite architecture en nuage (serveur 6). Cette dernière solution suppose que chacune des entités 31 de mesure et/ou de détection est en mesure de se connecter à cette architecture en nuage pour y envoyer ses données. La connexion pourra être réalisée par liaison filaire ou sans-fil.

Le système de surveillance peut comporter tout module de communication lui permettant d'établir des communications avec, d'un côté, les entités de mesure et/ou de détection 31 et, éventuellement, d'un autre côté avec le serveur 6.

Le système de surveillance 4 de l'invention consiste donc d'abord à lancer un module d'identification permettant de déterminer quelles sont les entités 31 parmi celles décrites ci-dessus qui sont en fonctionnement et ainsi quels sont les paramètres d'entrée qui sont à sa disposition. Pour cela, après un raccordement à chaque entité 31, le module d'identification peut récupérer, grâce à l'activation d'un module de lecture, l'identifiant associé à chaque entité 31, en déduire sa fonction et déterminer quelles sont les données que peut fournir chaque entité identifiée. Le système de surveillance 4 peut notamment comporter ou être connectée à une base de données stockant les informations liées à chaque entité de mesure et/ou de détection 31, chacune en liaison avec leur identifiant. Un module de recherche du système de surveillance est chargé de consulter la base de données pour y chercher ledit identifiant. La base de données pourra être stockée à distance dans le serveur 6 ou en local sur le système.

Cette étape d'identification des différentes entités 31 peut être mise en oeuvre préalablement ou simultanément à l'identification du système 3 de régulation de la température.

Le module d'identification est configuré pour déterminer quel est le système 3 de régulation de température qui est associé à l'armoire électrique 1, à partir des entités 31 de mesure et/ou de détection qui sont présentes dans le système 3.

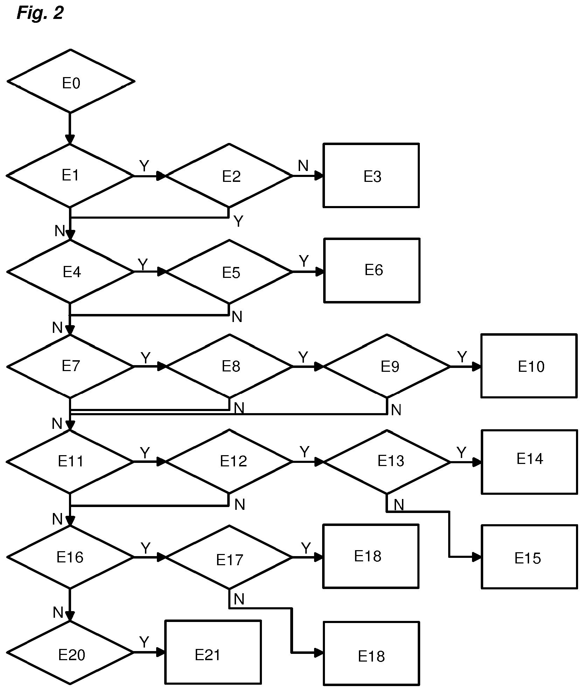

Pour cela, le module d'identification fonctionne selon l'algorithme d'identification ci-dessous, illustré par la figure 2 et sur lequel chaque branche référencée Y correspond à la réponse Oui et chaque branche référencée N correspond à la réponse Non.
- E0 : Démarrage de la séquence d'identification.
- E1 : Le module d'identification détermine si le système 3 de régulation de la température comporte un capteur de mesure de la température sur la grille d'entrée d'air et un capteur de mesure de la température sur la grille de sortie d'air.
- E2 : Si les deux capteurs de mesure de température sont présents, le module d'identification détermine si un thermostat est présent.
- E3 : Si aucun thermostat n'est présent, le module d'identification en déduit que le système 3 de régulation de température est de type aération naturelle.
- Si un thermostat est présent ou si les deux capteurs de mesure de température évoqués ci-dessus ne sont pas présents, le module d'identification poursuit l'algorithme d'identification.
- E4 : Le module d'identification détermine si le système de régulation de la température dispose d'un capteur de mesure du degré d'hygrométrie.
- E5 : Si le capteur de mesure du degré d'hygrométrie est présent, le module d'identification détermine si la dynamique de variation de l'hygrométrie est importante lorsque le thermostat est déclenché.
- E6 : Si la dynamique de variation est importante, le module d'identification en déduit que le système de régulation de température est un système de ventilation sans grille d'entrée, ni gille de sortie.
- E7 : Sinon, le module d'identification détermine si le système de régulation de la température comporte un capteur de mesure de la température sur la grille d'entrée d'air et un capteur de mesure de la température sur la grille de sortie d'air.
- E8 + E9 : Si les deux capteurs de mesure de température sont présents, le module d'identification détermine si la température mesurée au niveau de la grille d'entrée d'air est proche de la température mesurée au niveau de la grille de sortie d'air lorsque le thermostat est déclenché.
- E10 : Si les deux températures mesurées sont proches, le module d'identification en déduit que le système de régulation de température est un système de ventilation avec grilles.
- E11 : Sinon, le module d'identification détermine si un capteur de température au niveau d'une résistance chauffante est présent.
- E12 + E13 : Si ce capteur est présent, le module d'identification détermine si un capteur de mesure du nombre de tours d'un ventilateur est présent lorsque le thermostat est déclenché.
- E14 : Si les deux capteurs sont présents, le module d'identification en déduit que le système de régulation de température est un système de chauffage associé à un système de ventilation.
- E15 : Si seul le capteur de température au niveau d'une résistance chauffante est présent, le module d'identification en déduit que le système de régulation de température est un système de chauffage simple.
- E16 + E17 : Le module d'identification détermine si un capteur de mesure de la température du compresseur et si un capteur de mesure de la température de l'évaporateur sont présents.
- E18 : Si ces deux capteurs sont présents, alors le module d'identification en déduit que le système de régulation de température est un climatiseur.
- E19 : Si seul le capteur de mesure de la température de l'évaporateur est présent, alors le module d'identification en déduit que le système de régulation de température est un échangeur air/air.
- E20 : Le module d'identification détermine si un capteur de mesure de température de l'eau est présent.
- E21 : Si seul un capteur de mesure de température de l'eau est présent, le module d'identification en déduit que le système de régulation de température est un échangeur air/eau.

Selon un aspect de l'invention, cette séquence d'identification peut être mise en oeuvre plusieurs fois au cours du temps, par exemple à intervalles réguliers, afin de détecter tout changement dans l'architecture et dans l'environnement de l'armoire électrique. Son activation peut être réalisée de manière volontaire ou automatique.

Une fois l'identification terminée et les différents paramètres d'entrée disponibles identifiés, le système de surveillance 4 peut lancer un module de détermination des paramètres de sortie qu'il est possible de déterminer à partir desdits paramètres d'entrée identifiés. Puis, une fois les paramètres de sortie identifiés, le système de surveillance 4 peut lancer un module de surveillance permettant de d'effectuer un suivi de différents indicateurs et/ou de détermination d'alertes, nécessaires à la gestion du système 3 de régulation de la température qu'il a identifié.

On distingue notamment les différents indicateurs et les alertes suivants :
- Niveau d'énergie électrique consommée ;
- Etat de fonctionnement et niveau de dimensionnement du système de régulation de température (différant selon le type du système de régulation de température identifié) ;
- Etat de fonctionnement des circuits électroniques ;
- Alerte point chaud dans l'armoire électrique ;
- Alerte porte ouverte de l'armoire électrique ;
- Alerte intrusion ;
- Niveau d'encrassement du filtre et alerte encrassement du filtre ;
- Alerte température de surface ;
- Alerte vandalisme ;
- Cycle de dissipation thermique ;
- Capacité de chauffe et état de fonctionnement du système de chauffage ;
- Etat de fonctionnement du climatiseur ;
- Niveau d'encrassement de la batterie du condenseur et alerte perte de fluide de gaz frigorigène ;
- Efficacité énergétique de la solution thermique ;
- Etat de fonctionnement du compresseur ;
- Etat de fonctionnement du condenseur et efficacité de refroidissement de l'échangeur thermique air-eau ;
- Etat d'étanchéité armoire ;
- Niveau d'efficacité du système de ventilation ;

Pour chacun de ces indicateurs ou alertes, nous précisons dans le tableau ci-dessous quels sont les paramètres d'entrée et données pré-requises nécessaires au système de surveillance pour obtenir les données de sortie adaptées au suivi de l'indicateur ou à la détermination de l'alerte.

Chaque indicateur ou suivi d'alerte peut ainsi correspondre à un service 5 que le système de surveillance peut activer à partir du moment où les paramètres de sortie qui permettent la surveillance sont disponibles. Les services 5 activés seront par exemple accessibles en suivi via le serveur 6 depuis n'importe quel terminal connecté audit serveur via un réseau de communication (filaire et/ou sans-fil). On peut voir dans le tableau ci-dessous que certains indicateurs sont suivis ou certaines alertes sont déterminées à partir d'une combinaison de plusieurs paramètres de sortie identifiés.

L'identification du système 3 de régulation de la température présente une importance particulière dans la solution de l'invention en ce qu'elle permet de mieux identifier les services adaptés à ce système.

| **CAS** | **Grandeur et Données d'entrée pré-requises** | **Entité de mesure/déte ction** | **Paramètres d'entrée** | **Paramètre(s) de sortie** | **indicateur(s) /Alerte(s)** |
|---|---|---|---|---|---|
| **1** | Tension de fonctionnement du système de régulation de température - 230V ou 400V | Thermostat | Etat déclenché/Etat non déclenché | Nombre de cycles de fonctionnement | Energie électrique consommée |
| | | Capteur de courant | Courant électrique | Energie électrique consommée | Etat de fonctionnem ent et niveau de dimensionne ment du système de régulation de température |
| | | | | Temps de fonctionnement du système | |
| | | Horloge | | | |
| **2** | | Thermostat | Etat déclenché/Etat non déclenché | | Niveau de dimensionne ment du système de régulation de température |
| | | Capteur de température externe | Température externe | | |
| **3** | | Capteur de température interne de l'armoire Thermostat | Température | Durée d'exposition/niveau de température | Etat de fonctionnem ent circuits électroniques Alerte durée de vie circuits électroniques |
| | | | Etat déclenché/Etat non déclenché | | |
| **4** | | Thermostat | Etat déclenché/Etat non déclenché | | Alerte point chaud dans l'armoire électrique |
| | | Capteur de détection de l'état du thermostat dans son mode haute température | | | |
| **5** | Niveau contamination/pollution usine | Capteur détection état porte armoire | Ouvert/fermé | Durée d'exposition à un niveau de pollution | Alerte porte ouverte et niveau de pollution |
| | Pré-évaluation niveau de pollution installation | Capteur température externe | Température | | |
| | | Capteur température interne armoire | Température | | |
| | | Capteur de mesure du degré d'hygrométrie interne | Degré d'hygrométrie | | |
| | | Horloge | Temps | | |
| **6** | | Capteur détection état porte armoire Horloge | Ouvert/fermé | Nombre d'accès valide/invalide | Alerte intrusion |
| | | Serrure électronique Capteur de vibration | Accès valide/invalide | | |
| **7** | | Capteur encrassement filtre | | Niveau encrassement | Niveau encrassemen t filtre |
| | | Capteur RPM | | | Alerte encrassemen t filtre |
| **8** | | Capteur température de surface d'un élément (composant électronique, connexion...) | Température de surface | Niveau de température | Niveau de température de chaque élément sondé |
| | | | | | Alerte température |
| **9** | Situation de l'armoire électrique | Capteur détection état porte armoire | Ouvert/fermé | | Alerte intrusion |
| | | Capteur de vibration Serrure électronique | Niveau de vibration Accès valide/invalide | | Alerte vandalisme |
| **10** | Dimensions de l'armoire électrique | Capteur température grille entrée d'air | Température | Puissance thermique dissipée | Cycle de dissipation thermique |
| | Matériau de l'armoire électrique | Capteur température grille sortie d'air | Température | | |
| | Situation de l'armoire électrique | Horloge | Temps | | |
| **11** | | Capteur température de surface d'un élément (composant électronique, connexion...) | Température de surface | Capacité de chauffage | Etat de fonctionnem ent du système de chauffage |
| | | Thermostat | Etat déclenché/Etat non déclenché | | Alerte défaut de fonctionnem ent du système de chauffage |
| | | Capteur de mesure du degré d'hygrométrie interne | Degré d'hygrométrie | | |
| **12** | Température évaporation | Capteur température évaporateur | Température | | Etat de fonctionnem ent du climatiseur |
| | Température condenseur | Capteur température condenseur | Température | | Alerte défaut de fonctionnem ent du climatiseur |
| | | Thermostat | Etat déclenché/Etat non déclenché | | |
| | | Horloge | Temps | | |
| **13** | Température évaporation | Capteur température évaporateur | Température | Niveau d'encrassement de la batterie du condenseur et alerte perte de fluide de gaz frigorigène | Alerte encrassemen t batterie |
| | Température condenseur | Capteur température condenseur | Température | | Alerte formation glace à l'évaporateur |
| | | Thermostat | Etat déclenché/Etat non déclenché | | |
| | | Capteur détection état porte armoire | Ouvert/fermé | | |
| **14** | Période de mesure | Capteur de température externe | Température externe | Evolution entre température externe et interne | Efficacité thermique de la solution thermique |
| | Situation de l'armoire électrique | Capteur de température interne de l'armoire | Température interne | | Alerte refroidisseme nt nécessaire |
| | | Horloge | Temps | | |
| **15** | | Capteur température tuyau décharge compresseur | Température | Etat de fonctionnement compresseur | Alerte encrassemen t batterie compresseur |
| **16** | Type de source condenseur | Capteur de mesure de la température de l'eau utilisée dans l'échangeur air/eau | Température | Niveau d'efficacité du condenseur | Alerte risque de condensation ou génération de glace |
| | | | | | Alerte perte de puissance de froid |
| **17** | | Capteur de mesure du degré d'hygrométrie interne | Degré d'hygrométrie | Niveau d'étanchéité | Alerte étanchéité armoire |
| | | Capteur détection état porte armoire électrique | Ouvert/fermé | | |
| **18** | Courbe de performance du système de ventilation | Capteur pression système de ventilation Capteur RPM | Débit d'air | Niveau de fonctionnement du système de ventilation | Indication efficacité du système de ventilation |

De manière non exhaustive, ce tableau liste dix-huit cas de fonctionnement différents, pouvant être mis en oeuvre selon l'architecture du système de régulation identifié et selon les entités de mesure et/ou détection qui sont employées dans ce système pour aider à son fonctionnement et/ou le surveiller.

### Cas de fonctionnement n°1

Le système de surveillance 4 détermine le temps de fonctionnement en tenant compte de l'état du thermostat et détermine l'énergie électrique consommée en cumulé.

Le système de surveillance 4 peut vérifier le nombre de cycles par heure. Si ce nombre de cycles est trop élevé, il peut en conclure un sous-dimensionnement du système 3 de régulation de la température ou une inadaptation du système 3 de régulation de la température qui est employé.

Si le nombre de cycles de déclenchement du thermostat dépasse un certain seuil, le système de surveillance 4 peut émettre une alerte pour changement du thermostat.

### Cas de fonctionnement n°2

Dans ce cas, cela dépend du système 3 de régulation de la température qui est employé, c'est-à-dire de type climatiseur, ventilation, chauffage ou chauffage+ventilation.

Dans tous les cas, le système de surveillance 4 surveille le nombre de cycles de déclenchement du thermostat.

En fonction du nombre ce cycles déterminé, le système de surveillance 4 peut en déduire l'état de fonctionnement du système et éventuellement émettre une alerte en cas de surdimensionnement ou de sous-dimensionnement du système 3 de régulation.

### Cas de fonctionnement n°3

Il s'agit de surveiller l'état de fonctionnement des circuits électroniques présents dans l'armoire électrique 1.

Pour cela, le système de surveillance 4 peut surveiller si les circuits électroniques ne restent pas exposés à des températures trop élevées pendant une durée trop longue. Il peut également surveiller la différence de température entre la sortie d'air et l'entrée d'air. Si la différence est élevée et que la température au niveau de la grille de sortie est supérieure à un certain seuil, le système de surveillance 4 peut en déduire un risque de dysfonctionnement des circuits électroniques.

### Cas de fonctionnement n°4

Dans ce cas de fonctionnement, il s'agit de surveiller l'état du capteur de détection de l'état haute température, en général associé au thermostat. En cas de déclenchement, le système de surveillance 4 peut en déduire la présence d'un point chaud dans l'armoire électrique.

### Cas de fonctionnement n°5

Il s'agit de déterminer le niveau de pollution à l'intérieur de l'armoire électrique 1. Le risque intervient lorsque la porte de l'armoire électrique est ouverte.

### Cas de fonctionnement n°6

Il s'agit pour le système de surveillance 4 de mémoriser le nombre d'accès autorisés et non autorisés par la serrure électronique. Il s'agit également de détecter une ouverture de porte frauduleuse.

### Cas de fonctionnement n°7

Il s'agit pour le système de surveillance 4 de détecter le niveau d'encrassement du filtre. Toute solution de détection de niveau d'encrassement peut être employée. Il pourra s'agir par exemple d'une solution de détection telle que décrite dans la demande de brevet EP3029388A1**.**

### Cas de fonctionnement n°8

Il s'agit pour le système de surveillance 4 de surveiller la température de surface d'un composant ou d'une connexion électrique. Il peut émettre une alerte en cas de détection d'une surchauffe.

### Cas de fonctionnement n°9

Dans ce cas, le système de surveillance 4 surveille à la fois l'état du capteur de détection attaché à la porte de l'armoire électrique et l'état du capteur de vibration. Il peut ainsi en déduire un risque d'intrusion.

### Cas de fonctionnement n°10

A partir de caractéristiques de l'armoire électrique (dimensions, matériau, solutions thermiques installées, position de l'armoire électrique...), et des données fournies par les capteurs de température au niveau de l'entrée et de la sortie d'air, le système de surveillance 4 peut déterminer la courbe de dissipation thermique au cours du temps.

### Cas de fonctionnement n°11

Il s'agit de déterminer la capacité de chauffe du système de chauffage si celui-ci est présent. Le système de surveillance 4 peut en déduire un défaut de fonctionnement en cas de surchauffe.

### Cas de fonctionnement n°12

Dans le cas où le système de régulation de la température 3 comporte un climatiseur, il s'agit pour le système de surveillance 4 de surveiller son bon fonctionnement.

### Cas de fonctionnement n°13

Le système de surveillance 4 peut surveiller le niveau d'encrassement de la batterie du condenseur et envoyer une alerte pour indiquer un risque de casse du compresseur en cas d'encrassement prononcé.

### Cas de fonctionnement n°14

Le système de surveillance 4 surveille la fiabilité du système de dissipation thermique. Il peut émettre un message d'alerte pour indiquer qu'un système de ventilation ou de refroidissement spécifique est nécessaire.

### Cas de fonctionnement n°15

Le système de surveillance 4 surveille l'état de fonctionnement du compresseur à partir des données mesurées par un capteur de température placé sur le tuyau de décharge du compresseur.

### Cas de fonctionnement n°16

Le système de surveillance 4 surveille l'efficacité du refroidissement généré par l'échangeur air-eau et/ou le niveau de condensation à partir d'un capteur mesurant la température de l'eau à l'entrée de l'échangeur air-eau.

### Cas de fonctionnement n°17

Le système de surveillance 4 détermine l'efficacité de l'étanchéité de l'armoire électrique 1, à partir du capteur de mesure du degré d'hygrométrie et de l'état ouvert ou fermé de la porte de l'armoire électrique.

### Cas de fonctionnement n°18

Le système de surveillance 4 détermine le point de fonctionnement du système de ventilation et vérifie que celui-ci se trouve dans la bonne plage de fonctionnement. Le système de surveillance peut émettre un message indiquant que le système de ventilation n'est pas optimal.

Selon un aspect particulier de l'invention, le système de surveillance 4 peut donc lancer un module d'activation destiné à activer le ou les services liés à un cas de fonctionnement décrit ci-dessus si les paramètres d'entrée nécessaires à leur mise en service sont disponibles, ou autrement dit, si les capteurs nécessaires sont présents. Une fois le service activé, le système de surveillance 4 peut collecter les données nécessaires auprès des entités 31 concernées afin de les traiter de manière adaptée au service qui a été activé. Si les entités nécessaires sont présentes, le service pourra être activé automatiquement ou après validation d'un opérateur.

Selon un aspect particulier de l'invention, le système de surveillance comporte un module de détection de toute nouvelle entité de mesure et/ou de détection qui est ajouté. Après chaque nouvelle entité ajoutée détectée, le système de surveillance peut lancer un module de recherche destiné à déterminer si un nouveau service peut être activé en liaison avec cette nouvelle entité. Si un nouveau service peut être activé, le système de surveillance peut le proposer automatiquement ou attendre une validation d'un opérateur. Pour savoir si un nouveau service peut être activé, le module de recherche peut se baser sur une table telle que celle illustrée par le tableau ci-dessus.

Il ressort de ce qui précède que l'invention présente un certain nombre d'avantages, parmi lesquels :
- Une solution simple et rapide pour identifier le système de régulation de la température ;
- Une solution qui peut permettre de toujours proposer des services adaptés au système de régulation en place ;
- Une solution totalement transparente pour l'utilisateur, notamment lorsque celle-ci est directement implantée dans l'unité de commande du système de régulation de la température ;

## Revendications

1. Procédé de surveillance d'un système de régulation de température (3) qui agit sur la température à l'intérieur d'une armoire électrique (1),
ledit système de régulation de température (3) comportant plusieurs entités de mesure et/ou de détection (31) qui sont associées à ladite armoire électrique (1) et qui sont connectées à un système de surveillance (4),
ledit procédé étant mis en oeuvre par le système de surveillance (4) et comportant:
- une étape de détermination dans laquelle le type de chacune des entités de mesure et/ou détection (31) est déterminé par récupération d'un identifiant en provenance de ladite entité, lecture dudit identifiant et reconnaissance dudit identifiant dans une base de données,
- une étape d'identification dans laquelle le système de régulation de température (3) et un ou des paramètres d'entrée disponibles pour chacune des entités de mesure et/ou détection (31) sont identifiés en fonction du type, déterminé à l'étape de détermination, de chacune desdites entités,
- une étape d'activation dans laquelle un ou plusieurs services sont activés en fonction du système de régulation de température (3) ayant été identifié à l'étape d'identification, et
- une étape de traitement dans laquelle un ou plusieurs paramètres de sortie, qui sont déterminés par le système de surveillance (4) à partir du ou des paramètres d'entrée ayant été identifiés à l'étape d'identification, sont traités de manière adaptée au(x) service(s) ayant été activé(s) à l'étape d'activation, pour surveiller un ou plusieurs indicateurs et/ou déterminer une ou plusieurs alertes, ces indicateur(s) et/ou alerte(s) étant nécessaires à la gestion du système de régulation de température (3) ayant été identifié à l'étape d'identification et étant mis à disposition d'un utilisateur par le système de surveillance (4).

2. Procédé selon la revendication 1, **caractérisé en ce qu'**il comporte une étape de détection dans laquelle l'activation d'une nouvelle entité de mesure et/ou détection dans le système de régulation de température (3) est détectée.

3. Procédé selon la revendication 2, **caractérisé en ce qu'**il comporte une étape de recherche dans laquelle tout nouveau service à activer après la détection de l'activation de ladite nouvelle entité de mesure et/ou de détection est recherché.

4. Procédé selon l'une des revendications 1 à 3, **caractérisé en ce qu'**il comporte une étape d'envoi de données vers un serveur (6) distant.

5. Système de surveillance (4) d'un système de régulation de température (3) qui agit sur la température à l'intérieur d'une armoire électrique (1),
ledit système de régulation de température (3) comportant plusieurs entités de mesure et/ou de détection (31) qui sont associées à ladite armoire électrique (1) et qui sont connectées au système de surveillance (4),
ledit système de surveillance (4) étant configuré pour mettre en oeuvre le procédé conforme à l'une quelconque des revendications 1 à 4 et comportant :
- un module d'identification qui identifie, en fonction du type de chacune des entités de mesure et/ou de détection (31), le système de régulation de température (3) et un ou des paramètres d'entrée disponibles pour chacune des entités de mesure et/ou détection (31), lequel module d'identification comporte un module de lecture d'un identifiant stocké dans chaque entité de mesure et/ou de détection (31) et un module de recherche dudit identifiant dans une base de données,
- un module d'activation qui active un ou plusieurs services en fonction du système de régulation de température (3) ayant été identifié par le module d'identification,
- un module de détermination qui détermine un ou plusieurs paramètres de sortie à partir du ou des paramètres d'entrée identifiés par le module d'identification,
- des moyens de traitement qui traitent, de manière adaptée au(x) service(s) activé(s) par le module d'activation, le ou les paramètres de sortie déterminés par le module de détermination pour surveiller un ou plusieurs indicateurs et/ou déterminer une ou plusieurs alertes, nécessaires à la gestion du système de régulation de température (3) identifié par le module d'identification, et
- des moyens de mise à disposition qui mettent à disposition d'un utilisateur les indicateur(s) et/ou alerte(s).

6. Système selon la revendication 5, **caractérisé en ce qu'**il comporte un module de détection de chaque nouvelle entité de mesure et/ou détection activée dans le système de régulation de température (3).

7. Système selon la revendication 6, **caractérisé en ce qu'**il comporte un module de recherche de tout nouveau service à activer après la détection de l'activation d'une entité de mesure et/ou de détection.

8. Système selon l'une des revendications 5 à 7, **caractérisé en ce qu'**il comporte un module de communication pour se connecter à un serveur (6) distant.

## Patentansprüche

1. Überwachungsverfahren eines Temperaturregelsystems (3), das auf die Temperatur im Inneren eines Schaltschranks (1) einwirkt,
das Temperaturregelsystem (3) umfassend mehrere Mess- und/oder Erfassungseinheiten (31), die mit dem Schaltschrank (1) assoziiert sind und, die mit einem Überwachungssystem (4) verbunden sind,
wobei das Verfahren von einer elektronischen Überwachungsvorrichtung (4) implementiert ist und Folgendes umfasst:
- einen Bestimmungsschritt, wobei der Typ von jeder der Mess- und/oder Erfassungseinheiten (31) durch Abrufen einer Kennung von der Einheit, Lesen der Kennung und Erkennen der Kennung in einer Datenbank bestimmt wird,
- einen Identifizierungsschritt, wobei das Temperaturregelsystem (3) und ein oder mehrere Eingangsparameter, die für jede der Mess- und/oder Erfassungseinheiten (31) verfügbar sind, abhängig von dem Typ identifiziert werden, der in dem Bestimmungsschritt jeder der Einheiten bestimmt wird,
- einen Aktivierungsschritt, wobei ein oder mehrere Dienste abhängig davon aktiviert werden, dass das Temperaturregelsystem (3) in dem Identifizierungsschritt identifiziert wurde, und
- einen Verarbeitungsschritt, wobei ein oder mehrere Ausgangsparameter, die von dem Überwachungssystem (4) anhand des oder der Eingangsparameter bestimmt werden, die in dem Identifikationsschritt identifiziert wurden, auf eine Weise verarbeitet werden, die an den oder die Dienste angepasst ist, der/die in dem Identifikationsschritt aktiviert wurde(n), um einen oder mehrere Indikatoren zu überwachen und/oder eine oder mehrere Warnmeldungen zu bestimmen, wobei diese Indikatoren und/oder Warnmeldungen für die Verwaltung des Temperaturregelungssystems (3) notwendig sind, das in dem Identifikationsschritt identifiziert wurde und einem Benutzer durch das Überwachungssystem (4) bereitgestellt wird.

2. Verfahren nach Anspruch 1, **dadurch gekennzeichnet, dass** es einen Erfassungsschritt umfasst, wobei die Aktivierung einer neuen Mess- und/oder Erfassungseinheit in dem Temperaturregelsystem (3) erfasst wird.

3. Verfahren nach Anspruch 2, **dadurch gekennzeichnet, dass** es einen Suchschritt umfasst, wobei nach jedem neuen Dienst gesucht wird, der nach Erkennung der Aktivierung der neuen Mess- und/oder Erfassungseinheit aktiviert werden soll.

4. Verfahren nach einem der Ansprüche 1 bis 3, **dadurch gekennzeichnet, dass** es einen Schritt zum Senden von Daten zu einem entfernten Server (6) umfasst.

5. Überwachungssystem (4) eines Temperaturregelsystems (3), das auf die Temperatur im Inneren eines Schaltschranks (1) einwirkt,
das Temperaturregelsystem (3) umfassend mehrere Mess- und/oder Erfassungseinheiten (31), die mit dem Schaltschrank (1) assoziiert sind und die mit dem Überwachungssystem (4) verbunden sind,
wobei das Überwachungssystem (4) konfiguriert ist, um das Verfahren nach einem der Ansprüche 1 bis 4 zu implementieren und umfassend:
- ein Identifizierungsmodul, das abhängig von dem Typ jeder der Mess- und/oder Erfassungseinheiten (31) das Temperaturregelsystem (3) und einen oder mehrere Eingangsparameter, die für jede der Mess- und/oder Erfassungseinheiten (31) verfügbar sind, wobei das Identifizierungsmodul ein Modul zum Lesen einer in jeder Mess- und/oder Erfassungseinheit (31) gespeicherten Kennung und ein Modul zum Suchen des Identifikators in einer Datenbank umfasst,
- ein Aktivierungsmodul, das einen oder mehrere Dienste abhängig von dem Temperaturregelsystem (3) aktiviert, das durch das Identifizierungsmodul identifiziert wurde,
- ein Bestimmungsmodul, das einen oder mehrere Ausgangsparameter aus dem oder den vom Identifizierungsmodul identifizierten Eingabeparametern bestimmt,
- Verarbeitungseinrichtungen, die auf eine für den/die durch das Aktivierungsmodul aktivierten Dienst(e) geeignete Weise den/die durch das Bestimmungsmodul bestimmten Ausgangsparameter verarbeiten, um eine oder mehrere Kennungen zu überwachen und/oder eine oder mehrere Warnmeldungen zu bestimmen, die für die Verwaltung des durch das Identifizierungsmodul identifizierten Temperaturregelsystems (3) erforderlich sind, und
- Bereitstellungseinrichtungen, die einem Nutzer den/die Kennung(en) und/oder Warnmeldung(en) bereitstellen.

6. System nach Anspruch 5, **dadurch gekennzeichnet, dass** es ein Modul zum Erfassen jeder neu aktivierten Mess- und/oder Erfassungseinheit in dem Temperaturregelsystem (3) umfasst.

7. System nach Anspruch 6, **dadurch gekennzeichnet, dass** es ein Modul zum Suchen jedes neuen Diensts umfasst, der nach Erkennung der Aktivierung einer Mess- und/oder Erfassungseinheit aktiviert werden soll.

8. System nach einem der Ansprüche 5 bis 7, **dadurch gekennzeichnet, dass** es ein Kommunikationsmodul zur Verbindung mit einem entfernten Server (6) umfasst.

## Claims

1. Method for monitoring a temperature control system (3) which acts on the temperature inside an electrical cabinet (1),
said temperature control system (3) comprising a plurality of measuring and/or sensing entities (31) which are associated with said electrical cabinet (1) and which are connected to a monitoring system (4),
said method being implemented by the monitoring system (4) and comprising:
- a determination step in which the type of each of the measurement and/or detection entities (31) is determined by retrieving an identifier from said entity, reading said identifier and recognising said identifier in a database,
- an identification step in which the temperature control system (3) and one or more input settings available for each of the measuring and/or sensing entities (31) are identified according to the type, determined in the determination step, of each of said entities,
- an activation step in which one or more services are activated depending on the temperature control system (3) having been identified in the identification step, and
- a processing step in which one or more output settings, which are determined by the monitoring system (4) from the input setting(s) having been identified in the identification step, are processed in a manner adapted to the service(s) having been activated in the activation step to monitor one or more indicators and/or determine one or more alerts, which indicator(s) and/or alert(s) are required for the management of the temperature control system (3) identified in the identification step and are made available to a user by the monitoring system (4).

2. The method according to claim 1, **characterised in that** it comprises a detection step in which the activation of a new measuring and/or detecting entity in the temperature control system (3) is detected.

3. The method according to claim 2, **characterised in that** it comprises a search step in which any new service to be activated after the detection of the activation of said new measuring and/or detecting entity is searched.

4. Method according to one of claims 1 to 3, **characterised in that** it comprises a step of sending data to a remote server (6).

5. Monitoring system (4) of a temperature control system (3) which acts on the temperature inside an electrical cabinet (1),
said temperature control system (3) comprising a number of measuring and/or sensing entities (31) which are associated with said electrical cabinet (1) and which are connected to the monitoring system (4),
said monitoring system (4) being configured to implement the method according to any of claims 1 to 4 and comprising:
- an identification module which identifies, as a function of the type of each of the measuring and/or detection entities (31), the temperature control system (3) and one or more input settings available for each of the measuring and/or detection entities (31), which identification module comprises a module for reading an identifier stored in each measuring and/or detection entity (31) and a module for searching said identifier in a database,
- an activation module which activates one or more services depending on the temperature control system (3) identified by the identification module,
- a determination module which determines one or more output settings from the input setting(s) identified by the identification module,
- processing means which process, in a manner adapted to the service(s) activated by the activation module, the output setting(s) determined by the determination module to monitor one or more indicators and/or determine one or more alerts, necessary for the management of the temperature control system (3) identified by the identification module, and
- provision means that make the indicator(s) and/or alert(s) available to a user.

6. System according to claim 5, **characterised in that** it comprises a detection module for each new measuring and/or detection entity activated in the temperature control system (3).

7. A system according to claim 6, **characterised in that** it comprises a module for searching for any new service to be activated after the detection of the activation of a measuring and/or detection entity.

8. System according to one of claims 5 to 7, **characterised in that** it comprises a communication module for connecting to a remote server (6).
